# EUROPÄISCHE PATENTSCHRIFT

(11) **EP 0 576 935 B1**
(45) Veröffentlichungstag und Bekanntmachung des Hinweises auf die Patenterteilung: **14.06.1995**
(21) Anmeldenummer: 93109755.4
(22) Anmeldetag: 18.06.1993
(51) Int. Cl.: B62D 1/16

(54) **Abdeckeinheit für Lenksäulendurchführung durch eine Kraftfahrzeug-Trennwand**
Cover unit for steering column passage through a motor vehicle wall
Unité d'obturation du passage d'une colonne de direction à travers une paroi d'un véhicule à moteur

(30) Priorität: 02.07.1992 DE 4221669
(43) Veröffentlichungstag der Anmeldung: 05.01.1994
(73) Patentinhaber: A. Raymond & Cie, F-38028 Grenoble-Cédex (FR)
(72) Erfinder: Bodo, Giuseppe, Vercelli (IT)
(74) Vertreter: Kirchgaesser, Johannes, Dipl.-Ing.

(56) Entgegenhaltungen:
- EP-A- 0 213 977
- DE-C- 3 701 597
- FR-A- 2 674 200
- GB-A- 2 065 812
- US-A- 4 415 166

## Beschreibung

Die Erfindung bezieht sich auf eine Abdeckeinheit zur abgedichteten Durchführung einer Lenksäule durch die Trennwand zwischen Fahrerkabine und Vorderradlenkung eines Kraftfahrzeuges.

Um die Lenksäulendurchführung von der Fahrerkabine in den Bereich der Vorderradlenkung gegen das Motorgeräusch und/oder den Straßenlärm sowie gegen sich bildende Gase und Dämpfe aus dem Motorraum abzudichten, werden die Lenksäulen üblicherweise an der Trennwand zur Fahrerkabine von einer Gummimanschette umgeben, welche sich beiderseits der Trennwand dichtend am Rand der Durchgangsöffnung anlegt (DE 37 01 597 C2). Hierzu ist zu sagen, daß das Anlegen der Gummimanschette sehr mühsam ist und in der Regel zwei Monteure erfordert, undzwar einen, um die Manschette von der Lenkstangenseite zu drücken und einen, um die Manschette von der Fahrerkabine aus zu ziehen und dichtend am Rand der Durchgangsöffnung anzudrücken.

Aufgabe der Erfindung ist es, eine Abdeckeinheit mit guter Dichtungswirkung so zu gestalten, daß eine schnelle und problemlose Montage der Lenksäulendurchführung von nur einer Seite möglich ist.

Die zur Lösung dieser Aufgabe vorgeschlagene Abdeckeinheit ist nach den Merkmalen des Anspruchs 1 gekennzeichnet durch eine auf der Kabinenrückseite positionierbar Abdeckplatte mit einer zur Fahrerkabine gerichteten, über der Lenksäule leicht verschieblichen Dichtungshülse sowie einer von der Kabinenseite montierbaren Gegenplatte mit einem auf die Dichtungshülse aufdrückbaren Befestigungsring, welcher am vorderen Rand mit nach innen vorstehenden, auffederbaren Rastzähnen versehen ist, die in entsprechend nach außen abstehenden Rastringen auf der Dichtungshülse verankerbar sind, wobei die Dichtungshülse zur Vorderradlenkung hin eine nach außen abgesetste Ringfläche aufweist, welche auf einer entsprechenden Bundfläche an der Lenksäule abstützbar ist.

Hierdurch wird die Möglichkeit geschaffen, die Abdeckplatte zunächst auf der Lenksäule vorzumontieren, wobei die Dichtungshülse mit der abgesetzten Ringfläche auf der Bundfläche der Lenksäule abgestützt wird, und dann zusammen mit der Lenksäule in die Durchgangsöffnung der Trennwand bis zur Anlage der Abdeckplatte an der Trennwand einzuführen. Nachdem das Lenkgetriebe in üblicher Weise am Fahrzeugrahmen bzw. der Karosserie befestigt worden ist, kann die Gegenplatte ohne Mühe von der Fahrerkabine aus auf die Lenksäule aufgeschoben und mit dem Befestigungsring auf der Dichtungshülse verankert werden.

In dem Unteranspruch sind weitere Merkmale der Erfindung enthalten, welche in Verbindung mit dem in der Zeichnung dargestellten Ausführungsbeispiel der Erfindung nachfolgend näher erläutert werden sollen.
Es zeigt:
- Fig. 1: die Abdeckplatte in Draufsicht mit Blick auf die Dichtungshülse,
- Fig. 2: einen Schnitt durch die Abdeckplatte gemäß Linie II - II in Figur 1,
- Fig. 3: die Gegenplatte in Draufsicht,
- Fig. 4: einen Schnitt durch die Gegenplatte gemäß Linie IV - IV in Figur 3,
- Fig. 5: die Abdeckplatte bei der Vormontage auf die Lenksäule,
- Fig. 6: die Abdeckplatte mit der Lenksäule zusammen beim Einführen in die Durchgangsöffnung dar Trennwand und
- Fig. 7: die an die Trennwand angedrückte Abdeckplatte beim Aufdrücken der Gegenplatte.

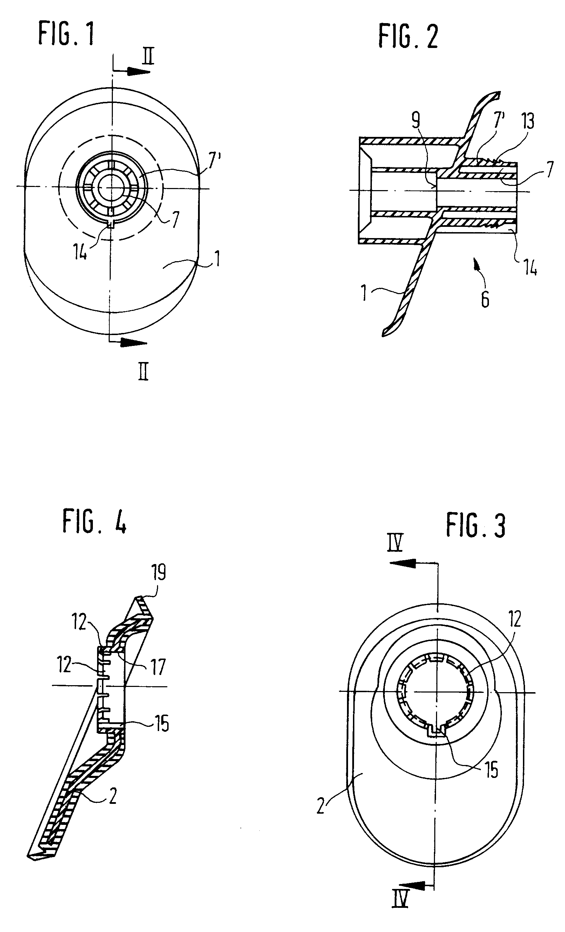

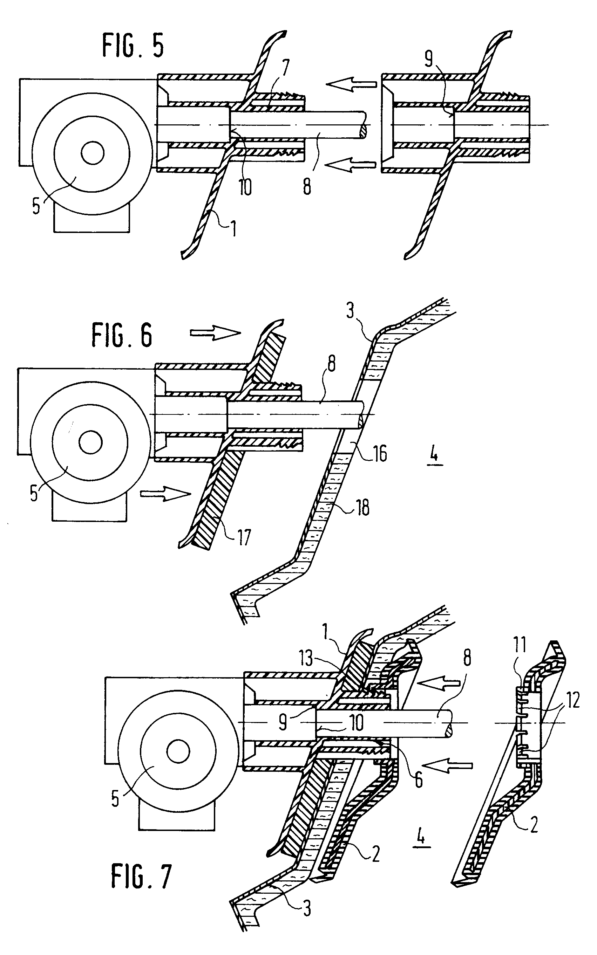

Die in den Figuren 1 - 4 dargestellte Abdeckeinheit besteht aus einer an die Trennwand 3 zwischen Fahrerkabine 4 und dem Raum der Vorderradlenkung 5 eines Kraftfahrzeugs dichtend andrückbaren Abdeckplatte 1 sowie einer von der Kabinenseite aus mit der Abdeckplatte 1 verbindbaren Gegenplatte 2 (siehe Figur 7).

Die Abdeckplatte 1 ist mit einer zur Fahrerkabine 4 gerichteten, doppelwandigen Dichtungshülse 6 versehen, deren Innenmantel 7 über die zur Vorderradlenkung 5 führenden Lenksäule 8 mit geringem Spiel aufschiebbar ist. Der Innenmantel 7 weist ferner eine in Aufsteckrichtung nach außen abgesetzte Ringfläche 9 auf, welche auf einer ebenfalls nach außen abgesetzten Bundfläche 10 an der Lenksäule 8 abstützbar ist (Figur 5).

Die in ihrer Form an die Innenseite der Trennwand 3 angepaßte Gegenplatte 2 ist mit einem die Platte 2 durchdringenden Befestigungsring 11 versehen, welcher auf die Dichtungshülse 6 aufdrückbar und mit dieser verankerbar ist. Der Befestigungsring 11 besitzt zu diesem Zweck an seinem der Dichtungshülse 6 zugewandten Rand eine Vielzahl von nach innen vorstehenden, auffederbaren, entgegen der Aufsteckrichtung angeschrägten Rastzähnen 12, während die Dichtungshülse 6 auf ihrem Außenmantel 7' in Aufsteckrichtung angeschrägte, mit den Rastzähnen 12 zusammenwirkende Rastringe 13 aufweist.

Die Dichtungshülse 6 besitzt ferner an ihrem Außenmantel 7' eine achsparallel abstehende Feder 14, die in eine entsprechende Nut 15 an der Innenseite des Befestigungsringes 11 einführbar ist, so daß die Gegenplatte 2 nur in der vorgesehenen Lage zur Trennwand 3 mit der Abdeckplatte 1 verbindbar ist.

Die Montagefolge beim Einsetzen der Abdeckeinheit zur abgedichteten Durchführung der Lenksäule 8 ist in den Figuren 5 bis 7 anschaulich dargestellt.

Zunächst wird die Abdeckplatte 1 mit der Dichtungshülse 6 in Pfeilrichtung über die Lenksäule 8 geschoben, bis die Hülse 6 mit der abgesetzten Ringfläche 9 auf der Bundfläche 10 der Lenksäule 8 aufliegt (Figur 5).

Sodann wird in Verbindung mit der Montage der Vorderradlenkung 5 im Rahmen bzw. in der Karosserie des Kraftfahrzeugs die Lenksäule 8 zusammen mit der Dichtungshülse 6 der Abdeckplatte 1 durch das Durchgangsloch 16 in der Trennwand 3 hindurchgeführt, wobei eine auf der Abdeckplatte 1 aufgelegte geräuschdämpfende Dichtungsplatte 17 an der Trennwand 3 zur Anlage gebracht wird. Die Trennwand 3 ist ihrerseits auf der Seite der Fahrerkabine 4 ebenfalls mit einer geräuschdämpfenden Schicht 18 versehen (Figur 6).

Nun kann die Gegenplatte 2 mit dem Befestigungsring 11 über die Lenksäule 8 soweit auf die Dichtungshülse 11 aufgedrückt werden, bis sich ein zur Trennwand 3 hin weisender, schräg nach außen abstehender Rand 19 der Gegenplatte 2 in die Dämpfungsschicht 18 eingräbt und damit gegen den Motorraum einen dichtenden Abschluß bildet (Figur 7).

## Patentansprüche

1. Abdeckeinheit zur abgedichteten Durchführung einer Lenksäule (8) durch die Trennwand (3) zwischen Fahrerkabine (4) und Vorderradlenkung (5) eines Kraftfahrzeuges, **gekennzeichnet** durch
eine auf der Kabinenrückseite positionierbaren Abdeckplatte (1) mit einer zur Fahrerkabine (4) gerichteten, über der Lenksäule (8) mit geringem Spiel aufschiebbaren Dichtungshülse (6) sowie eine von der Kabinenseite aus montierbare Gegenplatte (2) mit einem auf die Dichtungshülse (6) aufdrückbaren Befestigungsring (11), welcher am vorderen Rand mit nach innen vorstehenden, auffederbaren Rastzähnen (12) versehen ist, die in entsprechend nach außen abstehenden Rastringen (13) auf der Dichtungshülse (6) verankerbar sind, wobei die Dichtungshülse (6) zur Vorderradlenkung (5) hin eine nach außen abgesetzte Ringfläche (9) aufweist, welche auf einer entsprechenden Bundfläche (10) an der Lenksäule (8) abstützbar ist.

2. Abdeckeinheit nach Anspruch 1, dadurch gekennzeichnet, daß die zur Fahrerkabine (4) gerichtete Dichtungshülse (6) am Außenmantel (7') eine achsparallel abstehende Feder (14) aufweist, die in eine entsprechende Nut (15) an der Innenseite des Befestigungsrings (11) einführbar ist.

## Claims

1. A cover unit for passing a steering column (8) in sealed relationship through the partition (3) between the driving compartment (4) and the front wheel steering (5) of a motor vehicle, characterised by a cover plate (1) which can be positioned on the compartment rear side and which has a sealing sleeve (6) which is directed towards the driving compartment (4) and which can be pushed on with a small amount of clearance over the steering column (8), and a co-operating plate (2) which can be fitted from the compartment side and which has a fixing ring (11) which can be pressed on to the sealing sleeve (6) and which is provided at the front edge with inwardly projecting retaining teeth (12) which can be sprung open and which can be anchored in correspondingly outwardly projecting retaining rings (13) on the sealing sleeve (6), wherein the sealing sleeve (6) has towards the front wheel steering (5) an outwardly stepped annular surface (9) which can be supported on a corresponding collar surface (10) on the steering column (8).

2. A cover unit according to claim 1 characterised in that the sealing sleeve (6) which is directed towards the driving compartment (4) has on the external casing portion (7') a tongue (14) which projects in parallel relationship with the axis and which can be introduced into a corresponding groove (15) at the inside of the fixing ring (11).

## Revendications

1. Unité d'obturation de la traversée étanche d'une colonne de direction (8) au travers de la cloison séparant l'habitacle (4) du système de direction des roues avant (5) d'un véhicule automobile, **se caractérisant par** une plaque d'obturation (1) destinée à être placée sur la partie arrière del'habitacle, comportant une douille d'étanchéité (6), orientée en direction de l'habitacle (4), montée coulissante avec un jeu très faible sur la colonne de direction (8), ainsi qu'une plaque antagoniste (2) destinée à être montée depuis la partie habitacle, comportant une bague de fixation (11) s'emmanchant par pression sur la douille d'étanchéité (6), qui est munie au niveau de son bord antérieur de dents d'accrochage capables de se déformer élastiquement (12) faisant saillie vers l'intérieur, qui sont prévues pour venir s'encastrer dans des bagues d'accrochage (13) formant saillie en correspondance vers l'extérieur que comporte la douille d'étanchéité (6), cette douille d'étanchéité (6) présentant en l'occurrence une surface annulaire (9) déportée vers l'extérieur en direction du système de direction des roues avant, qui est destinée à venir pendre appui sur une surface d'épaulement (10) ménagée en correspondance sur la colonne de direction (8).

2. Unité d'obturation conformément à la revendication 1, se caractérisant par le fait que la douille d'étanchéité (6) orientée en direction de l'habitacle (4) comporte à sa périphérie (7') un ressort (14) en saillie dans un plan parallèle à l'axe, qui vient s'encastrer dans une rainure correspondante (15) ménagée à l'intérieur de la bague de fixation (11).
